# EUROPEAN PATENT SPECIFICATION

(11) **EP 1 623 781 B1**
(45) Date of publication and mention of the grant of the patent: **26.08.2009**
(21) Application number: 05447158.6
(22) Date of filing: 30.06.2005
(51) Int. Cl.: B22F 9/24, B22F 1/00

(54) **Gold nanoparticles and method of synthesizing the same**
Gold Nanopartikel und Verfahren zur Herstellung
Particules d'or nano et leur procédé de synthèse

(30) Priority: 26.07.2004 KR 2004058414
(43) Date of publication of application: 08.02.2006
(73) Proprietor: Korea Research Institute of Standards and Science, Daejeon Metropolitan-city (KR)
(72) Inventor: Ah, Chil Seong, Seoul (KR); Yun, Wan Soo, Daejeon Metropolitan-City (KR); Yun, Yong Ju, 120 Korea Research Inst. of Stds, Daejeon Metropolitan-City (KR); Ha, Dong Han, 105-1005, Cheonggunarae Apt., Daejeon Metropolitan-City (KR)
(74) Representative: Bird, Ariane

(56) References cited:
- LIU FU-KEN ET AL: "Microwave heating for the preparation of nanometer gold particles" JPN J APPL PHYS PART 1 REGUL PAP SHORT NOTE REV PAP; JAPANESE JOURNAL OF APPLIED PHYSICS, PART 1: REGULAR PAPERS AND SHORT NOTES AND REVIEW PAPERS JUNE 2003, vol. 42, no. 6 B, June 2003 (2003-06), pages 4152-4158, XP002351502
- TSUJI MASAHARU ET AL: "Synthesis of gold nanorods and nanowires by a microwave-polyol method" MATER LETT; MATERIALS LETTERS JUL 1 2004, vol. 58, no. 17-18, 1 July 2004 (2004-07-01), pages 2326-2330, XP004510609
- DATABASE EPODOC EUROPEAN PATENT OFFICE, THE HAGUE, NL; 15 November 2000 (2000-11-15), & CN 1 155 448 C (NANJING UNIV) 30 June 2004 (2004-06-30)
- DATABASE EPODOC EUROPEAN PATENT OFFICE, THE HAGUE, NL; 17 March 2004 (2004-03-17), & CN 1 482 622 A (WUHAN UNIVERSITY) 17 March 2004 (2004-03-17)

## Description

### BACKGROUND OF THE INVENTION

### 1. Field of the invention

The present invention relates to a synthesis method of gold nanoparticles and , and more particularly of gold nanoparticles which can be produced at low costs, high yields and large amounts by a liquid phase synthesis and has a planar shape with a controlled size.

### 2. Description of the Prior Art

As generally known in the art, gold nanoparticles are widely used in various fields, such as catalysts, chemical sensors, biosensors, optoelectronic devices, optical devices, nano-devices, and surface enhanced Raman scattering (SERS).

Such gold nanoparticles show various optical properties depending on their shape. For example, spherical gold nanoparticles have a strong absorbance peak at 500 - 600 nm, whereas nanorods and nanoboxes show absorbance peaks at 500 - 1,500 nm. Such optical properties are very important variables in various application fields of the gold nanoparticles, particularly in applications to biosensors or optical devices.

The shape of the gold nanoparticles determines their physical and chemical properties. Gold nanoparticles with a certain shape have the properties according to their shape. Therefore the shape control of the gold nanoparticles means the control of their properties.

Since the 1990s, the gold nanoparticles have been produced and studied in many fields, mostly in the form of spherical particles. However, attempts to produce planar gold nanoparticles as two-dimensional nanoplates and apply such nanoplates in the development of new materials are still insufficient in spite of their technological importance in the applications to optical devices, electronic devices, nanomechanical devices, etc.

Meanwhile, triangular plate-shaped gold nanoparticles were observed at an extremely small amount as a by-product in the synthesis of spherical nanoparticles (Chem. Lett. 2003, 32, 1114-1115), which cannot be considered as the synthesis of plate-shaped gold nanoparticles. There are no reports indicating that gold nanoparticles consisting of high-yield gold nanoplates without spherical nanoparticles were synthesized. Particularly, there is no example of reproducible preparation of gold nanoplates which have a thickness of a few to several tens of nanometers and a edge length ranging from several tens of nanometers to several thousands of nanometers and show characteristic optical spectra as in the present invention.

In Materials letters 58(2004) pp. 2326-2330 the microwave synthesis of gold nanoplates is disclosed.

### SUMMARY OF THE INVENTION

Accordingly, the present invention has been made to solve the above-mentioned problems occurring in the prior art. An advantage of the present invention is to provide gold nanoparticles consisting of gold nanoplates, which can be produced at low cost with high yields in large amounts by a liquid-phase synthesis and whose size can be controlled, as well as a synthesis method thereof.

Another advantage of the present invention is to provide gold nanoparticles consisting of gold nanoplates, which are highly crystalline and have the size controlled in the nanometer range.

The edge length or diameter of the gold nanoplates is preferably 10 nm - 2,000 nm, and the thickness of the gold nanoplates is preferably 1 nm - 100 nm.

In another aspect, the present invention provides a method according to claim 1 for preparing such gold nanoplates, which comprises the steps of stirring and heating an aqueous solution of HAuCl₄·3H₂O; adding a dispersion stabilizer to the HAuCl₄·3H₂O solution; adding a reducing agent to the HAuCl₄·3H₂O solution to which the dispersion stabilizer had been added; and heating and cooling the resulting mixture so as to form gold nanoplates.

The inventive method may further comprise the step of inducing the precipitation of the aqueous solution having the gold nanoplates formed therein, and then treating the upper layer with a filter.

The concentration of the HAuCl₄·3H₂O solution is preferably 0.1 mM to 10 mM. The dispersion stabilizer is polyvinylpyrrolidone (PVP), the molar ratio between the gold ions of the HAuCl₄·3H₂O solution and the polyvinylpyrrolidone is 1:0.1 to 1:10.

The reducing agent is sodium citrate, the molar ratio between the gold ions of the HAuCl₄·3H₂O solution and sodium citrate is 1:0.1 to 1:1.

### BRIEF DESCRIPTION OF THE DRAWINGS

The above and other objects, features, and advantages of the present invention wiii be more apparent from the following detailed description taken in conjunction with the accompanying drawings, in which:
FIG. 1 is a flow chart for illustrating a method for synthesizing gold nanoplates according to one embodiment of the present invention;
FIG. 2 shows the shape of gold nanoplates produced according to an embodiment of the present invention, which was measured by a scanning electron microscope;
FIG. 3a shows the shape and crystallinity of gold nanoplates produced according to an embodiment of the present invention, which were measured by a scanning electron microscope, a transmission electron microscope, and X-ray diffraction (XRD) analysis;
FIG. 3b illustrates that the size of gold nanoplates can be controlled by controlling synthetic conditions;
FIG. 4a shows the results of energy dispersive spectrometry for the nanoplates produced according to an embodiment of the present invention; and
FIG. 4b shows the UV-Vis NIR spectra of gold nanoplates according to the size of the nanoplates.

### DETAILED DESCRIPTION OF THE PREFERRED EMBODIMENTS

Hereinafter, a preferred embodiment of the present invention will be described with reference to the accompanying drawings.

In a preferred embodiment, the present invention produces gold nanoparticles in the form of gold nanoplates, which are highly crystalline and have the size controlled in the nanometer range. In another embodiment, the present invention produces gold nanopartciles in the form of gold nanoplates which can be produced at low cost with high yields in large amounts by a liquid phase synthesis method.

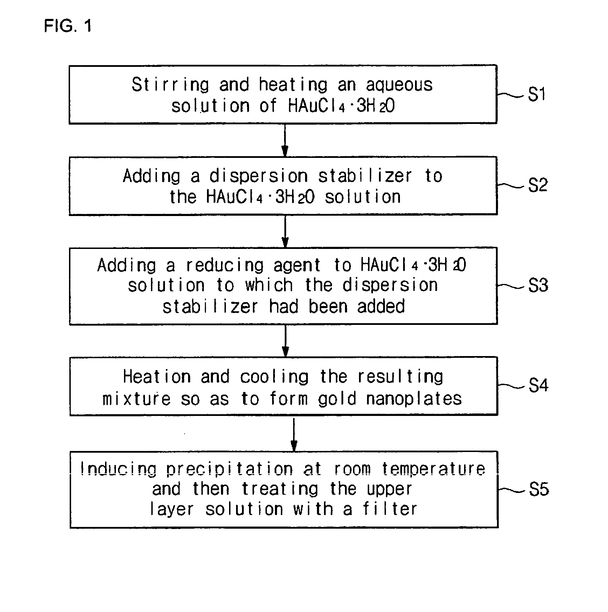

FIG. 1 is a flow chart for illustrating a method for synthesizing gold nanoparticles in the form of gold nanoplates according to one embodiment of the present invention.

As shown in FIG. 1, the inventive method for synthesizing gold nanoplates comprises the steps of: (S1) stirring and heating an aqueous solution of HAuCl₄·3H₂O; (S2) adding a dispersion stabilizer to the HAuCl₄·3H₂O solution; (S3) adding a reducing agent to the HAuCl₄·3H₂O solution to which the dispersion stabilizer had been added; and (S4) heating and cooling the resulting mixture so as to form gold nanoplates.

The inventive preparation method may further comprise the step (S5) of inducing the precipitation of the aqueous solution having the gold nanoplates formed therein, at room temperature, and then treating the upper layer with a filter, thus obtaining high-purity gold nanoplates.

In the step (S1) of heating the HAuCl₄·3H₂O solution with stirring, an aqueous solution of HAuCl₄·3H₂O is prepared from HAuCl₄·3H₂O with a purity of more than 99.9%, and heated in a reflux system with vigorous stirring. At this time, the concentration of the HAuCl₄·3H₂O solution is preferably 0.1 mM to 10 mM, and most preferably 1 mM.

In the step (S2) of adding the dispersion stabilizer to the HAuCl₄·3H₂O solution, the dispersion stabilizer, such as citric acid, polyacrylic acid (PPA), polyethylene glycol (PEG) or polyvinylpyrrolidone (PVP), is added to the HAuCl₄·3H₂O solution being stirred and heated. In the present invention, polyvinylpyrrolidone is used as the dispersion stabilizer. The polyvinylpyrrolidone is a kind of polymer with a molecular weight of about 50,000 and has a characteristic in that it is easily dissolved in water.

The molar ratio between the gold ions of the HAuCl₄·3H₂O solution and the polyvinylpyrrolidone is 1:10 to 1:7.

The step (S3) is the step where the reducing agent is added to the HAuCl₄·3H₂O solution to which the dispersion stabilizer had been added.

As the reducing agent, sodium citrate (C₆H₅Na₃O₇) is used. The molar ratio between the gold ions of the HAuCl₄·3H₂O solution and the sodium citrate is 1:0.1 to 1:1, and most preferably 1:0.5.

The sodium citrate has the following formula 1:

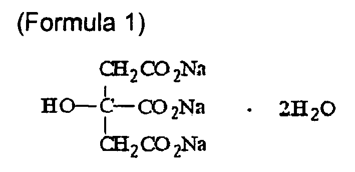

In the step (S4) of heating and cooling the HAuCl₄·3H₂O solution to which the reducing agent had been added, the solution is heated with vigorous stirring, and then cooled with stirring at room temperature, so as to form gold nanoplates.

In this case, the gold nanoplates are formed via the following reaction scheme:

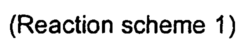

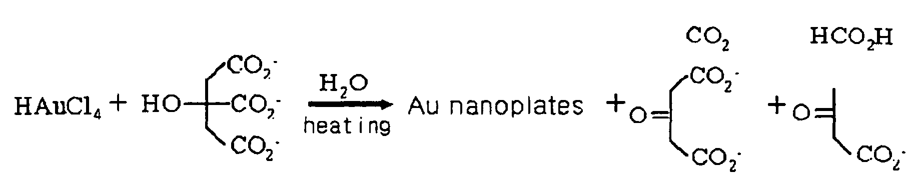

Namely, Au³⁺ is reduced into Au⁰ by the sodium citrate so as to induce the nucleation of gold nanoplates, and the anisotropic growth of the nuclei leads to form gold nanoplates.

In the step (S5) of inducing the precipitation of the solution at room temperature and then treating the upper layer of the solution with a filter, the HAuCl₄·3H₂O solution in which gold nanoplates had been formed is kept at room temperature to induce the precipitation, and then the upper layer portion in which the gold nanoplates are suspended are collected and filtered. In this case, in order to obtain high-quality, gold nanoplates, the upper layer solution in which the gold nanoplates are suspended is filtered several times using deionized water as a cleaning solvent. This is because the gold nanoplates with high purity are suspended in the upper layer portion of the solution.

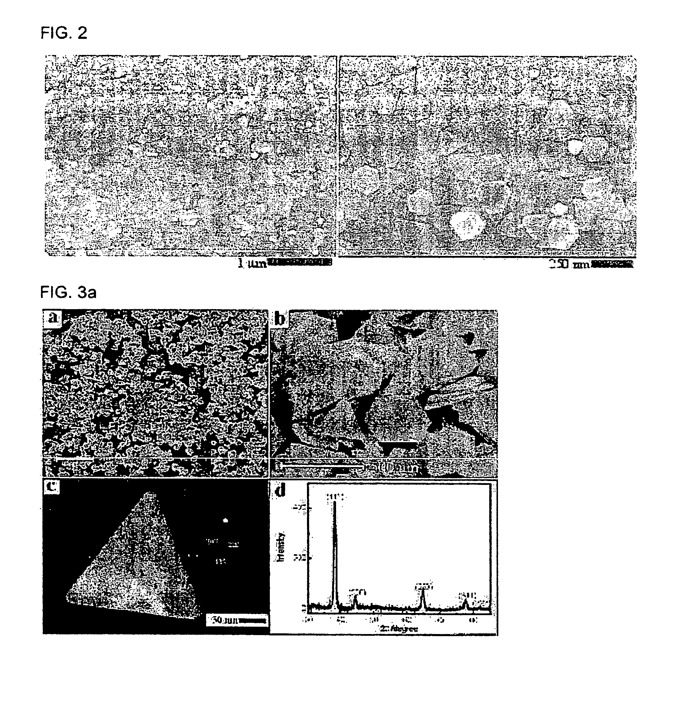

Meanwhile, FIG. 2 shows the shape of gold nanoplates according to an embodiment of the present invention, which was measured with a field emission scanning electron microscope (FS-SEM).

As shown in FIG. 2, the gold nanoplates produced according to an embodiment of the present invention have a thickness of 10 - 50 nm and a side length of 50 - 1,000 nm.
Furthermore, gold nanoplates with various sizes, which vary depending on filters used in the filtering step, can be obtained.

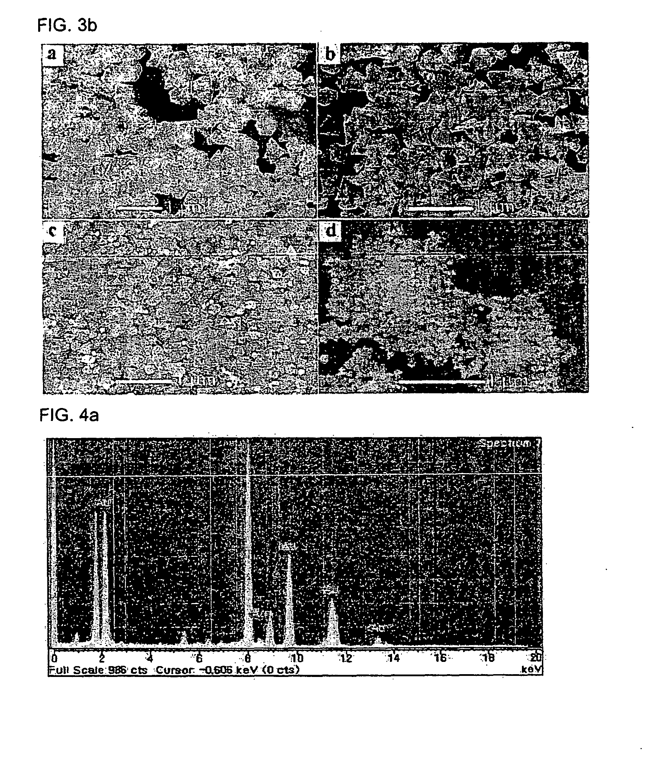

FIG. 3a shows the shape and crystallinity of gold nanoplates produced according to an embodiment of the present invention, which were measured by a scanning electron microscope, a transmission electron microscope, and X-ray diffraction (XRD) analysis. FIG. 3b illustrates that the size of gold nanoplates can be controlled by controlling synthesis conditions.

In FIG. 3a, (a) and (b) are a low-magnification and a high-magnification SEM photograph, respectively. As can be seen in (a) and (b) of FIG, 3a, the gold nanoplates according to the embodiment of the present invention have an edge length of 50 - 1,000 nm.

In FIG. 3a, (c) is a TEM photograph. The inset in (c) is a diffraction pattern taken along a direction perpendicular to the surface of the gold nanoplate, and shows {220} and {422} Bragg diffraction peaks corresponding to lattice constants 1.44 A and 0.83 A, respectively, relative to [111] axis. Also, in FIG. 3a, (d) shows the diffraction pattern of the gold nanoplates according to the embodiment of the present invention. The comparison of (d) with the JCPDS card shows that the inventive nanoplates have the crystalline structure of pure gold.

In FIG. 3b, (a), (b), (c), and (d) are electron microscope photographs of gold nanoplates formed when the molar ratios between HAuCl₄·3H₂O and polyvinylpyrrolidone are 1:9, 1:5, 1:2, and 1:0.1, respectively.

As can be seen in (a) to (d) of FIG. 3b, although the size of gold nanoplates can be slightly controlled depending on the kind of a filter used in the filtering step, the size of the gold nanoplates is strongly dependent upon the ratio of polyvinylpyrrolidone, a dispersion stabilizer, to HAuCl₄·3H₂O. More specifically, it is found that an increase in the ratio of poly-vinylpyrrolidone to HAuCl₄·3H₂O leads to an increase in the size of the gold nanoplates formed.

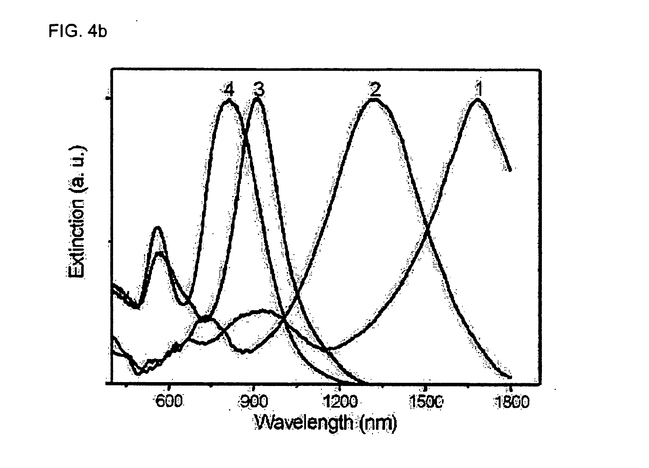

FIG. 4a shows the results of analysis using an energy dispersive spectrometer for the nanoplates according to the inventive embodiment, and FIG. 4b shows the UV-Vis NIR spectra of the gold nanoplates according to the size of the nanoplates.

As can be seen in FIG. 4a and 4b, the nanoplates produced according to the embodiment of the present invention show peaks at the characteristic wavelength of gold. Namely, the nanoplates produced according to the embodiment of the present invention are made of gold.

Moreover, the spectra 1 to 4 in FIG. 4b represent the spectra of the gold nanoplates shown in (a) to (d) of FIG. 3b, respectively. As can be seen in FIG. 4b, the gold nanoplates according to the embodiment of the present invention have two characteristic and strong absorbance peaks at visible and near infrared region (wavelength region of 500-2,000 nm), indicating that they have thin and planar shapes.

According to the above-described method for synthesizing the gold nanoplates, high purity gold nanoplates with a very small thickness and various sizes can be produced at high yields by a simple liquid phase synthesis and separation process.

Furthermore, the above-described method for synthesizing the gold nanoplates allows the provision of gold nanoplates of various sizes and shapes, as well as the provision of gold nanoplates having various physical and chemical properties.

Moreover, it is considered that the above-described nanoplates can be widely applied for the development of new materials, catalysts, photosensors, optical and electronic devices, nanomechanical parts, etc. Particularly, it is expected that the present invention will provide a synthesis method which allows the gold nanoplates to be produced at low costs, with high yields and in large amounts.

As described above, the present invention can provide the gold nanoplates which can be produced at low costs, high yields and large amounts by the liquid phase synthesis method, as well as the synthesis method thereof.

In addition, the present invention can provide the gold nanoplates with a single-crystalline structure and a size controlled in the nanometer range.

## Claims

1. A method for synthesizing gold nanoplates, which comprises the steps of:
stirring and heating an aqueous solution of HAuCl₄·3H₂O;
adding a dispersion stabilizer to the HAuCl₄·3H₂O solution;
adding a reducing agent to the HAuCl₄·3H₂O solution to which the dispersion stabilizer had been added; and
heating and cooling the resulting mixture so as to form gold nanoplates;
wherein the dispersion stabilizer is polyvinylpyrrolidone and the molar ratio between the gold ions of the HAuCl₄·3H₂O solution and
the polyvinylpyrrolidone is 1:0.1 to 1:10, and wherein the reducing agent is sodium citrate and the molar ratio between the gold ions of the HAuCl₄·3H₂O solution and sodium citrate is 1:0.1 to 1:1.

2. The method according to Claim 1, which further comprises the step of inducing the precipitation of the aqueous solution having the gold nanoplates formed therein, and then treating the upper layer solution with a filter.

3. The method according to any of claims 1 or claim 2, wherein the concentration of the HAuCl₄·3H₂O solution is 0.1 mM to 10 mM.

4. The method according to any of Claims 1 to 3, wherein the molar ratio between the gold ions of the HAuCl₄·3H₂O solution and sodium citrate is 1:0.1 to 1:0.5.

## Patentansprüche

1. Verfahren zur Herstellung von Goldnanoplättchen, welches die Schritte enthält:
Rühren und Erhitzen einer wässerigen Lösung von HAuCl₄ * 3H₂O ;
Zugeben eines Dispersionsstabilisators zu der HAuCl₄ * 3H₂O -Lösung;
Zugeben eines Reduktionsmittels zu der HAuCl₄ * 3H₂O -Lösung, zu welcher der Dispersionsstabilisator zugegeben wurde; und
Erhitzen und Abkühlen der resultierenden Mischung, um Goldnanoplättchen auszubilden;
wobei der Dispersionsstabilisator Polyvinylpyrrolidon ist und das molare Verhältnis zwischen den Goldionen der HAuCl₄ * 3H₂O -Lösung und dem Polyvinylpyrrolidon 1:0,1 bis 1:10 beträgt, und wobei das Reduktionsmittel Natriumzitrat ist und das molare Verhältnis zwischen den Goldionen der HAuCl₄ * 3H₂O -Lösung und dem Natriumzitrat 1:0,1 bis 1:1 beträgt.

2. Verfahren nach Anspruch 1, welches zusätzlich den Schritt des Induzierens der Fällung der wässerigen Lösung mit den darin gebildeten Nanoplättchen und dann eines Behandelns der Deckschichtlösung mit einem Filter enthält.

3. Verfahren nach einem der Ansprüche 1 oder 2, wobei die Konzentration der HAuCl₄ * 3H₂O - Lösung 0,1 mM bis 10 mM beträgt.

4. Verfahren nach einem der Ansprüche 1 bis 3, wobei das molare Verhältnis zwischen den Goldionen der HAuCl₄ * 3H₂O -Lösung und dem Natriumzitrat 1:0,1 bis 1:0.5 beträgt.

## Revendications

1. Procédé pour synthétiser des nanoplaques d'or, qui comprend les étapes consistant à :
agiter et chauffer une solution aqueuse de HAuCl₄·3H₂O ;
ajouter un stabilisant de dispersion à la solution de HAuCl₄·3H₂O ;
ajouter un agent réducteur à la solution de HAuCl₄·3H₂O à laquelle le stabilisant de dispersion a été ajouté ; et
chauffer et refroidir le mélange résultant de manière à former des nanoplaques d'or ;
dans lequel le stabilisant de dispersion est la polyvinylpyrrolidone et le rapport molaire entre les ions d'or de la solution de HAuCl₄·3H₂O et la polyvinylpyrrolidone est de 1:0,1 à 1:10, et dans lequel l'agent réducteur est le citrate de sodium, et le rapport molaire entre les ions d'or de la solution de HAuCl₄·3H₂O et le citrate de sodium est de 1:0,1 à 1:1.

2. Procédé selon la revendication 1, qui comprend en outre l'étape consistant à induire la précipitation de la solution aqueuse contenant les nanoplaques d'or qui y ont été formées, et puis à traiter la solution de la couche supérieure avec un filtre.

3. Procédé selon l'une quelconque de la revendication 1 ou de la revendication 2, dans lequel la concentration de la solution de HAuCl₄·3H₂O est de 0,1 mM à 10 mM.

4. Procédé selon l'une quelconque des revendications 1 à 3, dans lequel le rapport molaire entre les ions d'or de la solution de HAuCl₄·3H₂O et du citrate de sodium est de 1:0,1 à 1:0,5.
